# EUROPEAN PATENT APPLICATION

(11) **EP 2 256 257 A1**
(43) Date of publication of application: **01.12.2010**
(21) Application number: 09716534.4
(22) Date of filing: 04.03.2009
(51) Int. Cl.: E02F 9/00, B60K 11/04, F01P 11/10, F01P 11/12

(54) **HEAT EXCHANGING DEVICE FOR CONSTRUCTION MACHINE**

(30) Priority: 06.03.2008 JP 2008056415
(71) Applicant: Hitachi Construction Machinery Co., Ltd, Tokyo 112-0004 (JP)
(72) Inventor: CHANG, Sheng, Tsuchiura-shi Ibaraki 300-0013 (JP); KOBAYASHI, Tamio, Tsuchiura-shi Ibaraki 300-0013 (JP); SATO, Kensuke, Tsuchiura-shi Ibaraki 300-0013 (JP)
(74) Representative: Jansen, Cornelis Marinus
(86) International application number: PCT/JP2009/054074
(87) International publication number: WO 2009/110508

(57) **Abstract**

PROBLEM: To provide a heat exchanger assembly for a construction machine, which can facilitate attachment/detachment work of dustproof nets and can attach the dustproof nets with suppressed flapping.

SOLUTION: A heat exchanger assembly for a construction machine is provided with heat exchangers 20, 21 mounted on a frame 8 for cooling a drive source 12 mounted on the frame 8, a fan 23 mounted on the frame 8 for supplying cooling air to the heat exchangers 20,21, and dustproof nets 25 arranged upstream of the heat exchangers 20, 21 in a flow of the cooling air produced by the fan 23. The dustproof nets 25 are each provided with a net section 31 held taut within a frame section 30, and a clipping part 33 attached to the frame section 30. The clipping part 33 is arranged such that it can be releasably fastened to a clipped part 37a arranged on the corresponding heat exchanger 20 or 21. The clipping part 33 is provided at its end portion 34d with a bent portion 34e. At least one of the bent portion 34e and the clipped part 37a is provided with an elastic member 38.

## Description

### Technical Field

This invention relates to a heat exchanger assembly for a construction machine, which is useful, for example, in a hydraulic excavator, hydraulic crane, wheel loader or the like.

### Background Art

In general, a hydraulic excavator is provided with heat exchangers such as radiator for cooling engine coolant and an oil cooler for cooling hydraulic oil that operates various actuators. These heat exchangers are mounted such that they can be cooled by cooling air produced by rotation of a fan. Over a surface of each heat exchanger exposed to the cooling air, a dustproof net is arranged to avoid clogging of the heat exchanger itself. The dustproof net is attached to the heat exchanger by bolts.
Patent Document 1: JP-A-11-190215

### Disclosure of the Invention

### Problem to Be Solved by the Invention

To facilitate the attachment/detachment work of these dustproof nets, the above-mentioned conventional technology limits the bolted attachment to upper parts of the dustproof nets and designs lower parts of the dustproof nets in an insertable formation.

However, unscrewing of the bolts is needed to detach the dustproof nets from the heat exchangers. Whenever cleaning the dustproof nets, this irksome unscrewing of the bolts is required.

Although the lower parts of the dustproof nets are designed in the insertable formation, the dustproof nets flatter by the wind pressure of cooling air if the lower parts are of a construction that they are simply fitted in slots. It is, therefore, impossible to adopt a construction that omits the bolted fixing of the upper parts of the dustproof nets. Especially in a hydraulic excavator of the small swing radius type or a compact excavator having a construction that an operator's cab and heat exchangers are mounted with a small distance between them, noises produced by this flapping become harsh to the operator's ear.

An object of the present invention is to provide a heat exchanger assembly for a construction machine, which can facilitate attachment/detachment work of a dustproof net and can attach the dustproof net with suppressed flapping.

### Means for Solving the Problem

To achieve the above-described object, the invention as defined in claim 1 of the subject application is **characterized in that** in a heat exchanger assembly for a construction machine, said assembly being provided with a frame, a drive source mounted on the frame, a heat exchanger mounted on the frame for cooling the drive source, a fan mounted on the frame for supplying cooling air to the heat exchanger, and a dustproof net arranged upstream of the heat exchanger in a flow of the cooling air produced by the fan, the dustproof net is provided with a frame section, a net section held taut within the frame section, and a clipping part attached to the frame section, the clipping part is arranged such that the clipping part can be releasably fastened to a clipped part formed on a side of the heat exchanger, at least one of the clipping part and clipped part is provided with an elastic member, and a projecting portion of the clipped part is set equal or greater in dimension to or than a recessed portion of the clipping part such that the clipping part and clipped part can be brought into fitting engagement with the elastic member being interposed therebetween.

By the invention as defined in claim 1 and constructed as described above, the attachment/detachment work of the dustproof net can be facilitated without needing the use of a tool, and the dustproof net can be attached with suppressed flapping.

The invention as defined in claim 2 of the subject application is **characterized in that** in the invention as defined in claim 1, the frame is arranged swingably.

The invention as defined in claim 3 of the subject application is **characterized in that** in the invention as defined in claim 1 or 2, the dustproof net is provided at an upper part of the frame section with a handle portion.

By the invention as defined in claim 3 and constructed as described above, a contribution can be made to an improvement in the readiness of pulling out the dustproof net.

The invention as defined in claim 4 of the subject application is **characterized in that** in the invention as defined in claim 3, the handle portion is arranged integrally with the clipping part.

By the invention as defined in claim 4 and constructed as described above, it is possible to facilitate assembly work that attaches the handle portion and clipping part to the frame section.

The invention as defined in claim 5 of the subject application is **characterized in that** in a heat exchanger assembly for a construction machine provided with a travel base having a pair of track frames and tracks wrapped around the respective track frames, a revolving upperstructure swingably mounted on the travel base, an operator's cab mounted on a front part of the revolving upperstructure, a counterweight mounted on a rear part of revolving upperstructure, an engine compartment cover extending over between the operator's cab and the counterweight on the revolving upperstructure, a fan mounted inside the engine compartment cover, heat exchangers arranged inside the engine compartment cover and mounted at locations where the heat exchangers are exposed to cooling air produced by rotation of the fan, and dustproof nets arranged on upstream sides of the respective heat exchangers, the dustproof nets are each provided with a frame section, a net section held taut within the frame section, a handle portion attached to an upper part of the frame section, a first clipping part arranged integrally with the handle portion, and a second clipping part attached to a lower part of the frame section, the first clipping part and second clipping part are arranged such that the first clipping part and second clipping part can be releasably fastened, respectively, to clipped parts formed on support frame members on which the heat exchangers are supported, and the first clipping part and second clipping part are provided at end portions thereof with bent portions, respectively, at least one of the bent portions and the clipped parts are provided with elastic members, respectively, and projecting portions of the clipped parts are set equal or greater in dimension to or than recessed portions defined at the bent portions such that the bent portions and clipped part can be brought into fitting engagement, respectively, with the elastic members being interposed therebetween.

### Advantageous Effects of the Invention

According to the present invention, the attachment/detachment work of a dustproof net can be facilitated, and the dustproof net can be attached with suppressed flapping.

### Best Mode for Carrying out the Invention

Based on an embodiment applied to a hydraulic excavator, the present invention will hereinafter be described with reference to the accompanying drawings.

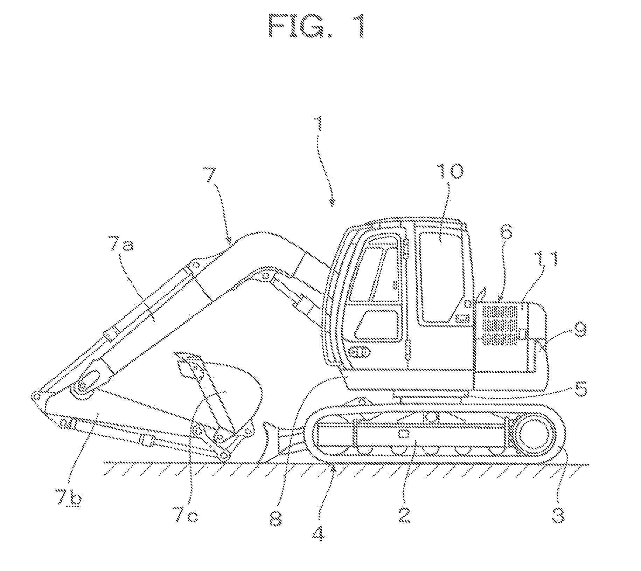

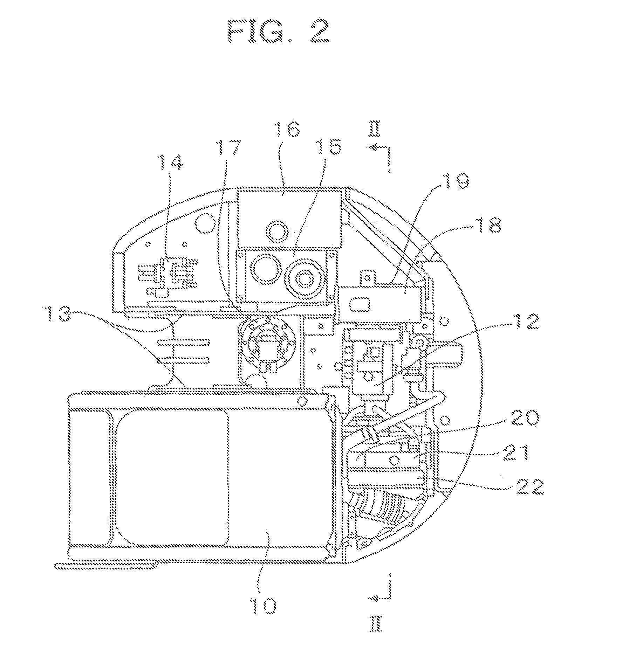

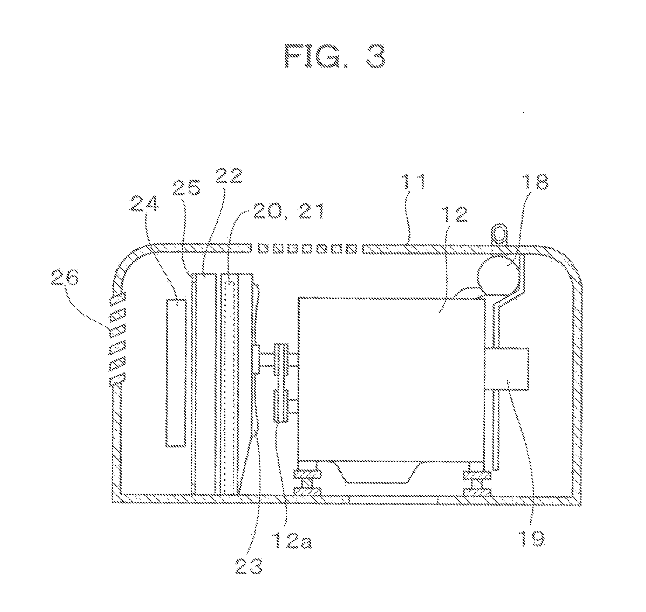

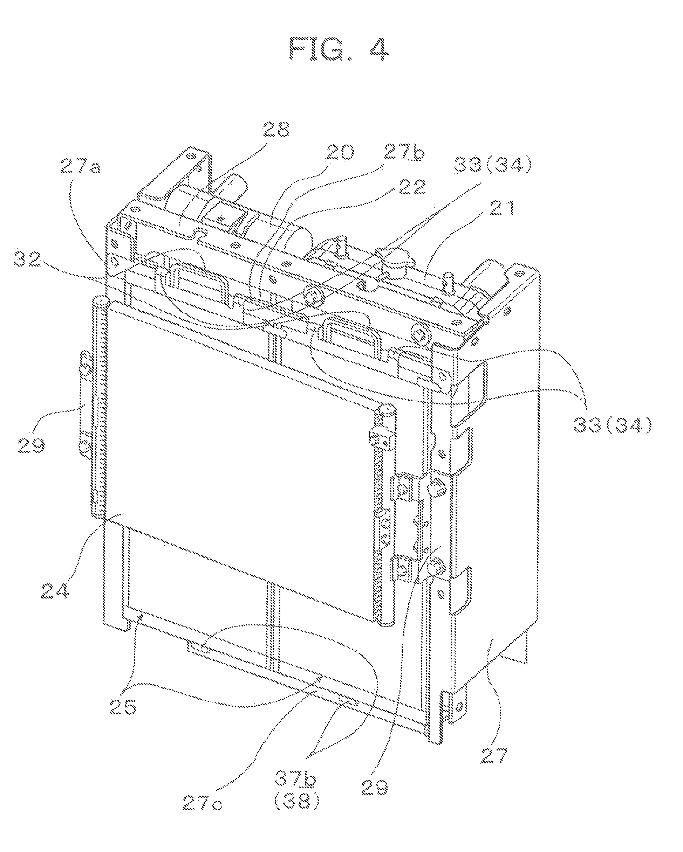

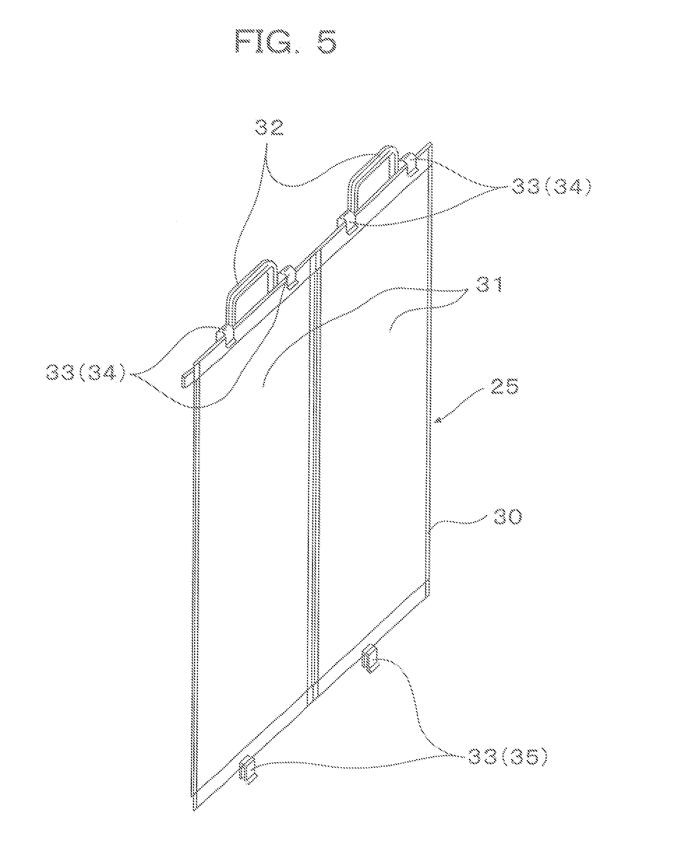

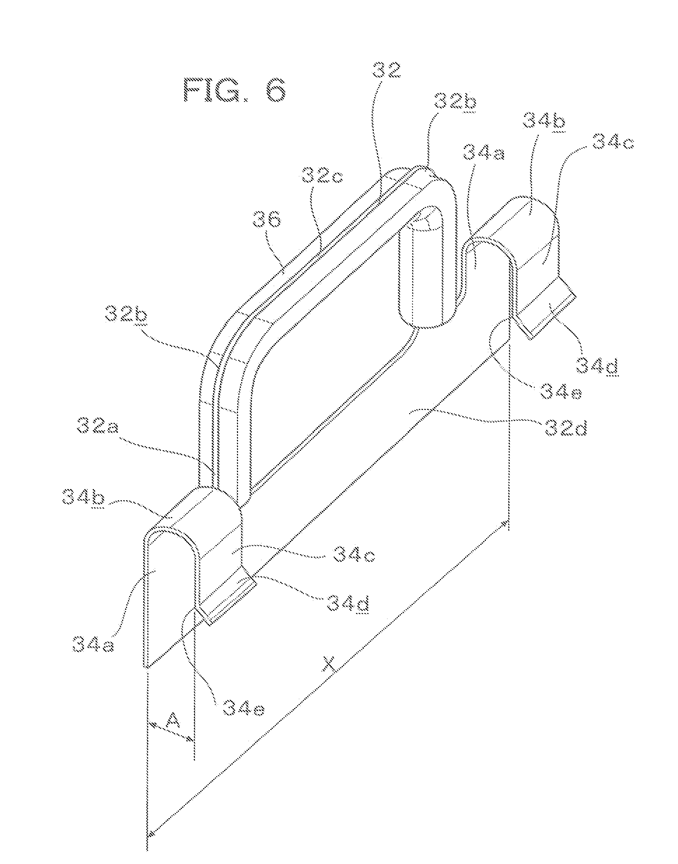

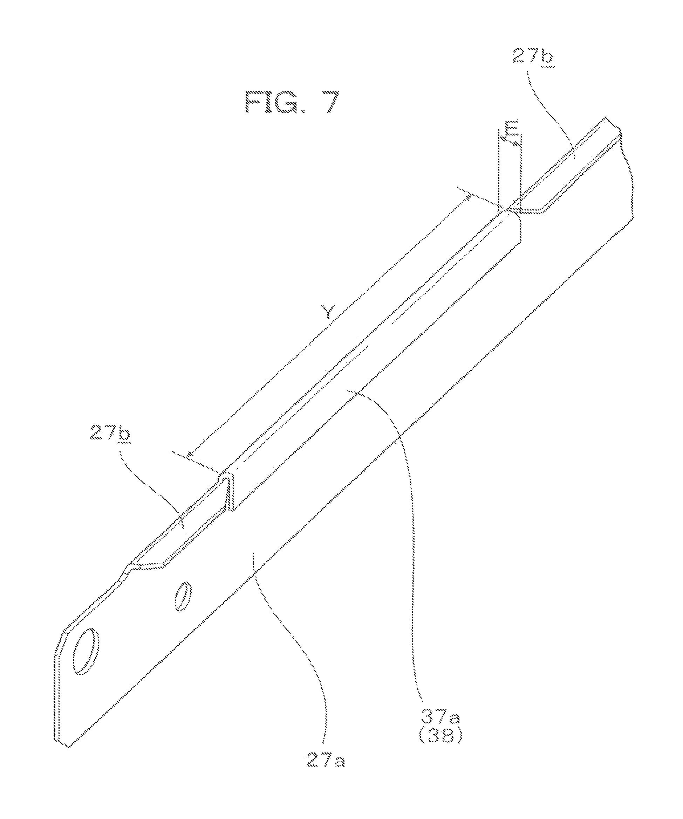

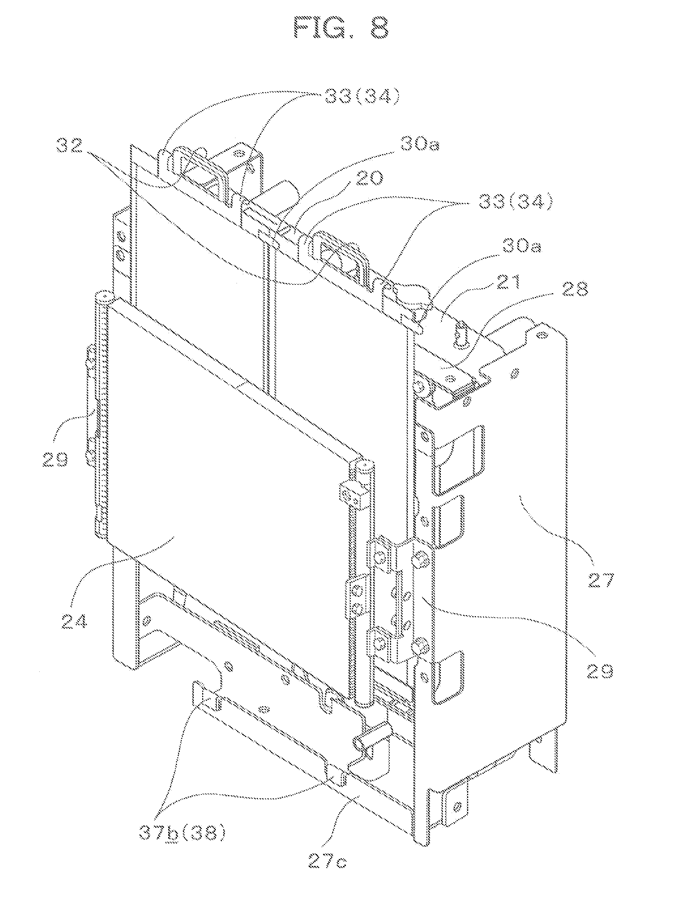

FIG. 1 is a side view illustrating the hydraulic shovel in its entirety, and FIG. 2 is a top plan view illustrating the layout on a revolving frame. FIG. 3 is a vertical cross-sectional view as seen in a direction of arrows II-II of FIG. 2, and FIG. 4 is a perspective view illustrating the construction of heat exchangers with dustproof nets attached thereto. FIG. 5 is a perspective view illustrating the dustproof nets in the present invention, and FIG. 6 is a perspective view illustrating only a handle portion of each dustproof net. FIG. 7 is an enlarged fragmentary view illustrating an upper part of a support member on a side of its corresponding heat exchanger, said upper part being provided with a clipped part, and FIG. 8 is a perspective view illustrating the dustproof nets in the course of being pulled out of the heat exchangers. For the sake of convenience, these drawings will be described by assuming the left side and right side of the drawing of FIG. 1 as front side and rear side, respectively, and the upper side and lower side of the drawings of FIG. 2 as right side and left side, respectively.

As shown in FIG. 1, a hydraulic excavator 1 is generally constructed of a travel base 4 having track frames 2 arranged in a pair and endless tracks 3 wrapped around the respective track frames, a revolving upperstructure 6 mounted on the travel base 4 via a swing mechanism 5, and a front working mechanism 7 pivotally arranged on a front side of the revolving upperstructure 6.

The revolving upperstructure 6 is constructed of a revolving frame 8 swingably mounted on the swing mechanism 5, a counterweight 9 mounted on a rear end of the revolving frame 8, a cab 10 mounted as an operator's cab on a front side of the revolving frame 8 and in a neighborhood of a mounted basal end portion of the front working mechanism 7, and an engine compartment cover 11 extending over a space between the cab 10 and the counterweight 9.

The front working mechanism 7 is comprised of a boom 7a pivotally mounted at a basal end portion thereof on the revolving frame 8, an arm 7b pivotally arranged at a basal end portion thereof on a free end portion of the boom 7a, and a bucket 7c pivotally attached to a free end portion of the arm 7b.

Reference is next had to FIG. 2. Inside the engine compartment cover 11, an engine 12 is mounted as a drive source between a front side of the counterweight 9 and a rear side of the cab 10 such that the engine lies in a transverse direction of the revolving frame 8, and on a right side of the cab 10, a support frame assembly 13 that supports the boom 7a in the front working mechanism 7 is arranged. On an anterior right side of the support frame assembly 13, a control valve 14 is arranged, and posterior to the control valve 14, a hydraulic oil tank 15 and a fuel tank 16 are arranged in this order from the inner side of the revolving frame 8. A space that is surrounded by the support frame assembly 13, hydraulic oil tank 15 and engine 12 is located approximately around a center of the revolving frame 8, and at this location, a swing motor 17 is arranged. On an upper right side of the revolving frame 8 relative to the engine 12, a muffler 18 is arranged, and below the muffler, a hydraulic pump 19 is arranged. On a left side of the revolving frame 8 relative to the engine 12, an oil cooler 20 and a radiator 21 are mounted as heat exchangers disposed side by side. On a lateral side of the revolving frame 8 relative to the oil cooler 20 and radiator 21, an air cooler 22 is mounted as a heat exchanger. The radiator 21 is mounted to cool the engine 12, while the oil cooler 20 is mounted to cool hydraulic oil. On an upstream side of cooling air relative to the air cooler 22, a condenser 24 for an air conditioner is mounted and supported pivotally toward a lateral side of the revolving upperstructure.

As illustrated in FIG. 3, a fan 23 is mounted on a rotating shaft of the engine 12 via a pulley 12a. Cooling air produced by the fan 23 is introduced into the inside of the engine compartment cover 11 after flowing through louvers 26 formed in the engine compartment cover 11 and past the condenser 24 for the air conditioner, dustproof nets 25, the air cooler 22 and the oil cooler 20 or radiator 21 in this order. The dustproof nets 25 are arranged on upstream sides of the heat exchangers led by the radiator 21 in a flow of the cooling air produced by the fan 23.

As depicted in FIG. 4, the oil cooler 20 and radiator 21 are mounted side by side, and the oil cooler 20 and radiator 21 are held, supported and fixed between a pair of support frame members 27, 27 arranged upright on the revolving frame 8.

On upstream sides of the oil cooler 20 and radiator 21, the air cooler 22 is fixedly supported by the support frame members 27,27, and an upper part of the air cooler 22 is fixed by a beam member 28 arranged bridging the paired support frame members 27,27. The area of a heat dissipating part of the air cooler 22 is set substantially equal to the total of respective heat-dissipating parts of the oil cooler 20 and radiator 21.

On a lateral side of the paired support frame member 27,27 as viewed relative to a body, the condenser 24 for the air conditioner is mounted via a pair of brackets 29,29. This condenser 24 for the air conditioner is pivotally supported on one of the brackets 29, and is arranged detachably relative to the other bracket 29.

A description will hereinafter be made about details of the dustproof nets 25 as essential parts of the present invention.

As shown in FIG. 5, the dustproof nets 25 are each generally constructed of a frame section 30 having a rectangular shape, a meshed net section 31 held taut within the frame section 30, a turned square U-shaped handle portion 32 to be grasped upon attachment or detachment of the dustproof net, and plural clipping parts 33 attached to the frame section 30. The illustrated two frame sections 30,30 are formed as discrete elements from each other, and are provided at an end portion of one of the upper parts of the frame sections with a lug 30a that extends out beyond the contour of the relevant frame section. This lug 30a serves to guide the other dustproof net 25, and also serves to limit the position of the other dustproof net 25.

The clipping parts 33 include upper clipping parts 34 attached to the upper part of the frame section 30 and a lower clipping part 35 attached to a lower part of the frame section 30.

As illustrated in FIG. 6, the handle portion 32 and the upper clipping parts 34 are integrally formed. Specifically, the handle portion 32 is provided at fixed basal end portions thereof with the upper clipping parts 34 arranged in a pair such that the handle portion 32 is flanked by the upper clipping parts 34 with a horizontally-extending, plate-shaped support plate member 32d being interposed between the upper clipping parts 34. The upper clipping parts 34 have been formed by bending a pair of wings, which upwardly extended in conjunction with the support plate member 32d, in circular arcs, respectively. Described in further detail, the upper clipping parts 34 each include an upwardly-extending upright portion 34a, a rounded bent portion 34b formed in conjunction with the upright portion 34a, a downwardly-extending turned-back portion 34c formed in conjunction with the bent portion 34b, and an end portion 34d formed in conjunction with the turned-back portion 34c and extending obliquely downwards in a direction away from the upright portion 34a. A bent portion 34e, which is formed between the turned-back portion 34c and the end portion 34d, is shaped and dimensioned such that fitting is feasible between the bent portion 34e and a clipped part 37a, which will be described subsequently herein, with a below-described elastic member 38 being interposed between them. Elastic members 36,38 are formed from a soft material such as, for example, a rubber material, resin material or felt.

The handle portion 32 is formed of a pair of rising portions 32a extending upwardly from the support plate member 32d and a grip portion 32c formed in conjunction with upper ends of the respective rising portions 32a via corresponding rounded bent portions 32b. The grip portion 32c is arranged substantially in parallel with the support plate member 32d. The elastic member 36, which has a turned U-shape in cross-section, fits on and covers the handle portion 32.

To the support plate member 32d, the upper part of the frame section 30 is secured by fixing means such as welds or bolts.

On the side of the heat exchangers to which the dustproof nets 5 are to be attached, on the other hand, an upper support member 27a is arranged on an outboard side of the body relative to the beam member 28 arranged bridging the paired support frame members 27,27 and in parallel with the beam member 28 as shown in FIG. 7. The height of an upper part of the upper support member 27 is set such that it conforms to the height position of the upper clipping part 34 in a state that the dustproof net 25 is attached. The upper support member 27 was shaped and dimensioned such that at plural locations of its upper part, the upper support member would become longer in an upward direction over a predetermined dimension, and the portions set longer over the predetermined dimension have been bent. The dimension Y between mutually-adjacent bent portions 27b is set substantially equal to the length dimension X of the support plate member 32d at the handle portion 32. The bent portions 27b have a function to limit movements of the support plate member 32d in the horizontal direction.

As depicted in FIG. 8, a support member 27c that connects the paired support frame members 27 to each other at lower parts thereof is arranged below the heat exchanger, and is provided with lower clipped parts 37b at height positions where their fitting with the corresponding lower clipping parts 35 of the respective dustproof nets 25 is feasible. Elastic members 38 have been fitted beforehand on the lower clipped parts 37b, and therefore, the fitting engagement between the lower clipped parts 37b and the lower clipping parts 35 can absorb vibrations caused by flapping. The lower clipping parts 35 have a similar shape as the above-mentioned upper clipping parts 34 except that the lower clipping parts 35 are not integral with any handle portions.

The clearance dimensions of each bent portion 34e and its corresponding upper clipped part 37a are set such that as illustrated in FIG. 6, a dimension D (not shown) obtained by subtracting the thickness dimension B (not shown) of the frame section 30 from the dimension A between the bent portion 34e and the upright portion 34a is equal to or smaller than the thickness E of the elastic member 38 attached beforehand to the upper clipped part 37a. As described above, each upper clipping part 34 and its corresponding upper clipped part 37a are dimensioned such that the elastic member 38 fitted on the upper clipped part 37a and the bent portion 34e can be brought into fitting engagement. This dimensional relationship equally applies to the bent portion of each lower clipping part 35 and its corresponding lower clipped part 37b. The term "clearance dimension" at the bent portion 34e indicates the above-described dimension D as the dimension of a clearance that is defined by a recessed portion, and the term "dimension" at the upper clipped part 37a indicates the dimension of a thickness of a projecting portion of the upper clipped part 37a.

Handling of this embodiment will hereinafter be described based on the attachment and detachment work of the dustproof nets 25.

When the hydraulic excavator 1 is operated for a predetermined time, foreign matter adheres to the net sections 31 of the dustproof nets 25 and surfaces of the radiator 21, oil cooler 20 and the like. To clean the dustproof nets 25 in particular, the dustproof nets 25 are upwardly pulled out to detach the same as illustrated in FIG. 8. After completion of cleaning of the dustproof nets 25, the dustproof nets 25 are inserted from above the heat exchangers such that the clipping parts 34,35 arranged on the dustproof nets 25 and the clipped parts 37a,37b arranged on the sides of the heat exchangers are brought into fitting engagement with each other with the elastic members 38 being interposed therebetween.

In the above-described embodiment, the dustproof nets 25 are attached only by the mutual fitting engagement between the clipping parts 34,35 and the clipped parts 37a, 37b with the elastic members 38 being interposed therebetween. The dustproof nets 25 can, therefore, be pulled out or inserted without performing attachment/detachment work of fixing members such as bolts by using a tool. As a consequence, the attachment/detachment work of the dustproof nets 25 can be facilitated, thereby making it possible to shorten the time required for maintenance.

Owing to the arrangement of the dustproof nets such that the elastic members 38 fitted on the upper clipped parts 37a and the bent portions 34e are fitted together, the dustproof nets can be attached with suppressed flapping. As a consequence, it is possible to avoid noises, which are harsh to the operator's ear and would otherwise be produced by flapping.

The above embodiment was described based on the example as applied to the self-propelling hydraulic excavator 1. However, the present invention can also be applied to a hydraulic excavator of the type equipped with no travel base or the type having no swing function, and can also be applied to a crane or wheel loader.

The above description was made by taking, as an example, the dustproof nets in which the clipping parts 33 and handle portions 32 were integral with each other. However, the clipping parts 33 and handle portions 32 may be formed discretely from each other. When it is desired to reduce the weight of the dustproof nets 25 or when the vertical dimensions of the dustproof nets 25 are shortened to facilitate their pulling-out, for example, the dustproof nets 25 may be formed without absolutely needing the handle portions 32.

Although not shown in any one of the figures, the formation of the upper clipping parts and lower clipping parts in a common shape can contribute to a reduction in the number of parts and also to a reduction in cost when the clipping parts and the handle portions are formed discretely or when the dustproof nets are formed without the handle portions.

The above embodiment was described by taking, as an example, the radiator 21 and oil cooler 20 mounted side by side, so that the dustproof nets 25 were also arranged in a paired form. However, one of the dustproof nets 25 may obviously be omitted when the radiator 21 and oil cooler 20 are mounted in series.

The above embodiment was described by taking, as an example, the upper clipped parts 37a and lower clipped parts 37b with the elastic members fitted thereon. Similar advantageous effects can also be brought about when elastic members are fitted in the upper clipping parts 34 and lower clipping parts 35.

It is to be noted that the first clipping part and second clipping part recited in the claim correspond to the upper clipping part 34 and lower clipping part 35, respectively.

### Brief Description of the Drawings

[FIG. 1] FIG. 1 is a side view illustrating the hydraulic shovel in its entirety.
[FIG. 2] FIG. 2 is a top plan view illustrating the layout on a revolving frame.
[FIG. 3] FIG. 3 is a vertical cross-sectional view as seen in a direction of arrows II-II of FIG. 2.
[FIG. 4] FIG. 4 is a perspective view illustrating the construction of heat exchangers with dustproof nets attached thereto.
[FIG. 5] FIG. 5 is a perspective view illustrating the dustproof nets in the present invention.
[FIG. 6] FIG. 6 is a perspective view illustrating only a handle portion of each dustproof net.
[FIG. 7] FIG. 7 is an enlarged fragmentary view illustrating an upper part of a support member on a side of its corresponding heat exchanger, said upper part being provided with a clipped part.
[FIG. 8] FIG. 8 is a perspective view illustrating the dustproof nets in the course of being pulled out of the heat exchangers.

### Legend

- 1: Hydraulic excavator
- 2: Track frame
- 3: Track
- 4: Travel base
- 5: Swing mechanism
- 6: Revolving upperstructure
- 7: Front working mechanism
- 8: Revolving frame
- 9: Counterweight
- 10: Cab
- 11: Engine compartment cover
- 12: Engine
- 13: Support frame assembly
- 14: Control valve
- 15: Hydraulic oil tank
- 16: Fuel tank
- 17: Swing motor
- 18: Muffler
- 19: Hydraulic pump
- 20: Oil cooler
- 21: Radiator
- 22: Air cooler
- 23: Fan
- 24: Condenser for air conditioner
- 25: Dustproof net
- 26: Louvers
- 27: Support frame member
- 27a: Upper support member
- 27b: Bent portion
- 27c: Lower support member
- 28: Beam member
- 29: Bracket
- 30: Frame section
- 30a: Lug
- 31: Net section
- 32: Handle portion
- 32a: Rising portion
- 32b: Bent portion
- 32c: Grip portion
- 32d: Support plate member
- 33: Clipping part
- 34: Upper clipping part
- 34a: Upright portion
- 34b: Bent portion
- 34c: Turned-back portion
- 34d: End portion
- 34e: Bent portion
- 35: Lower clipping part
- 36: Elastic member
- 37a: Upper clipped part (clipped part)
- 37b: Lower clipped part (clipped part)
- 3 8: Elastic member

## Claims

1. A heat exchanger assembly for a construction machine, said assembly being provided with:
a frame,
a drive source mounted on the frame,
a heat exchanger mounted on the frame for cooling the drive source,
a fan mounted on the frame for supplying cooling air to the heat exchanger, and
a dustproof net arranged upstream of the heat exchanger in a flow of the cooling air produced by the fan, wherein:
the dustproof net is provided with:
a frame section,
a net section held taut within the frame section, and
a clipping part attached to the frame section,
the clipping part is arranged such that the clipping part can be releasably fastened to a clipped part formed on a side of the heat exchanger,
at least one of the clipping part and clipped part is provided with an elastic member, and
a projecting portion of the clipped part is set equal or greater in dimension to or than a recessed portion of the clipping part such that the clipping part and clipped part can be brought into fitting engagement with the elastic member being interposed therebetween.

2. The heat exchanger assembly according to claim 1, wherein the frame is arranged swingably.

3. The heat exchanger assembly according to claim 1 or 2, wherein the dustproof net is provided at an upper part of the frame section with a handle portion.

4. The heat exchanger assembly according to claim 3, wherein the handle portion is arranged integrally with the clipping part.

5. A heat exchanger assembly for a construction machine provided with:
a travel base having a pair of track frames and tracks wrapped around the respective track frames,
a revolving upperstructure swingably mounted on the travel base,
an operator's cab mounted on a front part of the revolving upperstructure,
a counterweight mounted on a rear part of the revolving upperstructure,
an engine compartment cover extending over between the operator's cab and the counterweight on the revolving upperstructure,
a fan mounted inside the engine compartment cover,
heat exchangers arranged inside the engine compartment cover and mounted at locations where the heat exchangers are exposed to cooling air produced by rotation of the fan, and
dustproof nets arranged on upstream sides of the respective heat exchangers, wherein:
the dustproof nets are each provided with:
a frame section,
a net section held taut within the frame section,
a handle portion attached to an upper part of the frame section,
a first clipping part arranged integrally with the handle portion, and
a second clipping part attached to a lower part of the frame section,
the first clipping part and second clipping part are arranged such that the first clippingpart and second clipping part can be releasably fastened, respectively, to clipped parts formed on support frame members on which the heat exchangers are supported, and the first clipping part and second clipping part are provided at end portions thereof with bent portions, respectively,
at least one of the bent portions and the clipped parts are provided with elastic members, respectively, and
projecting portions of the clipped parts are set equal or greater in dimension to or than recessed portions defined at the bent portions such that the bent portions and clipped part can be brought into fitting engagement, respectively, with the elastic members being interposed therebetween.
